# EUROPEAN PATENT APPLICATION

(11) **EP 1 398 964 A2**
(43) Date of publication of application: **17.03.2004**
(21) Application number: 03018785.0
(22) Date of filing: 28.08.2003
(51) Int. Cl.: H04N 5/76

(54) **Content-recording apparatus and method, content-reproducing apparatus and method, and recording medium**

(30) Priority: 03.09.2002 JP 2002257897
(71) Applicant: MATSUSHITA ELECTRIC INDUSTRIAL CO., LTD., Kadoma-shi, Osaka 571-8501 (JP)
(72) Inventor: Hatae, Eiichi, Kaho-gun Fukuoka-ken 820-0074 (JP); Yoshida, Hiroyuki, Kasuya-gun Fukuoka-ken 811-2401 (JP); Iwasaki, Shiro, Iizuka-shi Fukuoka-ken 820-0054 (JP); Sawada, Taiji, Iizuka-shi Fukuoka-ken 820-0066 (JP)
(74) Representative: Balsters, Robert

(57) **Abstract**

A content-recording apparatus comprising: an Internet connection unit (4); an entering unit (3) operable to command information that a user inputs; a memory unit (2) operable to store a relation between command information and a channel; a display control unit (7) operable to generate a monitor signal for a television based on content data that content-recording unit (6) stores; and a control unit (1) operable to search, referring to the memory unit (2), at the content-recording unit (6), content data having a channel showed by command information, when the concerned data exists, the display control unit (7) generates a signal for a monitor (8) based on the content data.

## Description

This invention relates to a content-recording apparatus and a content-reproducing apparatus, which can easily record and reproduce content data acquired via a network, and an art related thereto.

In this specification, "content" means arbitrary combination of a dynamic image, a still picture, a text, or a pictograph, and "content data" means digital data by which the above-mentioned content is recorded in arbitrary formats.

In order to be in communication with a partner in recent years, the opportunity to send and to receive an E-mail via networks, such as the Internet, is increasing.

In this E-mail, data, such as not only alphabetic data in replacement of a letter but also an audio data, a still picture data, or a moving image data, can be sent and received as attachments to the E-mail.

However, in exchanging content data, attaching an image data taken with a video camera to an E-mail requires some knowledge and experiences, and it is not an easy work for the general user who is not skilled in a computer.

Considering this point, the data format for attaching taken data with a video camera to an E-mail is set up; as a result, taking-in of content data has become easier. This art is disclosed in published Japanese Patent Application Laid-Open No. 10-171728. In addition, various improvements are similarly made for a transmitting side that transmits content data.

A sender of an E-mail, who takes pictures with a video camera and sends a content data (a picture data), has some mechanical or electrical background, and is often familiar with computer environment.

However, a receiver of an E-mail, who receives and just looks at the content data (for example, elderly people and children), does not often have such a background.

Even though a user receives an E-mail with attached image data, the data is wasted if the user can not play back the content data.

In order to make the operation easier for the side of the E-mail receiver, an art that allots an E-mail to a TV channel is proposed in published Japanese Patent Application Laid-Open No. 2001-249864.

By the above-mentioned art, a user, upon receiving image data, can easily play back the image data, by just pushing a button of a TV remote controller.

However, in the art disclosed by published Japanese Patent Application Laid-Open No. 2001-249864, the channel selection signals to be transmitted to a mail server are assigned to unused channels of a television.

Therefore, for a receiver, who receives content data from a plurality of senders via the mail server, can only assign the mail server.

For the reason, when a receiver receives a lot of content data from a plurality of senders via the mail server, it is hard to put in order or search content data for reproduction from a lot of content data.

What is worse, content data can not be found and such a situation may occur that reproducing the content data becomes impossible

An object of the present invention is to provide a content-recording apparatus that lets a receiver of content data reproduce easily the content data.

A first aspect of the present invention provides a content-recording apparatus comprising a content-recording unit operable to record content data relating with a channel and the content data, wherein the channel comprises a channel assigned to a transmitter and/or a transmitter's group having transmitted the content data.

According to the construction described above, by specifying a channel, content data can be classified and dealt with per a transmission source and/or a group of a transmission source. As a result, when a receiver receives a lot of content data from a plurality of senders, the receiver can easily find out a target content data. Therefore, convenience and easiness in operation can be improved at the same time.

Because content data is recorded in the content-recording unit, not only content data acquired on real time, but also the content data acquired in the past can be viewed and listened to.

A second aspect of the present invention as defined in the first aspect of the present invention provides a content-recording apparatus, further comprising: a network connection unit operable to acquire content data via a network; an entering unit operable to receive command information entered by a user; a memory unit operable to memorize relation between the command information and the channel; a display control unit operable to generate a signal-for-display-device based on the content data recorded onto the content-recording unit; and a control unit operable to search, referring to the memory unit, at the content-recording unit content data having a channel showed by command information entered by the user using the entering unit to make, when the content data having the channel showed by the command information entered by the user using the entering unit exits, the display control unit generate a signal-for-display-device based on the content data having the channel showed by the command information entered by the user using the entering unit.

According to the construction described above, for content data received via a network, a user of a transmission destination can generate monitor signals related to the target content data only by inputting a command from an entering unit.

A third aspect of the present invention as defined in the first aspect of the present invention provides a content-recording apparatus, wherein the content-recording unit exists in a shared area on the network.

According to the construction described above, at the sites of a transmission source and a transmission destination of the content data, recording domains to be used for content-recording can be omitted.

Since a transmission destination can receive content data when the content data is uploaded by a transmission source to a shared domain, a burden of sending content data can be reduced more than when the transmission source directly sends the content data to the transmission destination.

A fourth aspect of the present invention as defined in the second aspect of the present invention provides a content-recording apparatus, wherein the entering unit comprises a channel button, and wherein command information generated by the depression of the channel button shows a channel number.

According to the construction described above, a user of a transmission destination can easily generate monitor signals related to target content data just like changing channels of TV.

A fifth aspect of the present invention as defined in the fourth aspect of the present invention provides a content-recording apparatus, wherein the entering unit comprises a special reproduction button that acts on the signal-for-display-device

According to the construction described above, a user of a transmission destination not only can change channels with channel buttons, but also can perform special reproductions (such as forward, stop, slow forward, slow rewind, and pause) of the content data of a selected channel.

A sixth aspect of the present invention as defined in the second aspect of the present invention provides a content-recording apparatus, wherein the memory unit memorizes, at least, a channel number and a transmitter's IP address relating with each other.

According to the construction described above, a transmission source can be clearly specified by the IP address.

A seventh aspect of the present invention as defined in the second aspect of the present invention provides a content-recording apparatus, wherein the memory unit memorizes, at least, a channel number and a transmitter's E-mail address relating with each other.

According to the construction described above, a transmission source can be clearly specified by the E-mail address.

An eighth aspect of the present invention as defined in the second aspect of the present invention provides a content-recording apparatus, wherein the transmitter information memorized onto the memory unit comprises DNS (domain name service).

According to the construction described above, a transmission source can be clearly specified by the DNS.

A ninth aspect of the present invention as defined in the second aspect of the present invention provides a content-recording apparatus, wherein the transmitter information memorized onto the memory unit comprises a transmitter's name.

According to the construction described above, a transmission source can be clearly specified by the name, and a user of a transmission destination can easily recognize a transmission destination, referring to a name of the transmission source.

A tenth aspect of the present invention as defined in the second aspect of the present invention provides a content-recording apparatus, wherein contents memorized onto the memory unit are able to edit using the entering unit.

According to the construction described above, a transmission destination side can change contents that a memory unit stores, when the contents need to be changed.

A transmission destination can perform editing on the contents with own thoughts, such as assigning a favorite transmission source to a certain channel number.

The above, and other objects, features and advantages of the present invention will become apparent from the following description read in conjunction with the accompanying drawings, in which like reference numerals designate the same elements.
Fig. 1 is a block diagram for a content-reproducing apparatus, illustrating how a content-recording apparatus in a first embodiment of the present invention is used.
Fig. 2 (a) is a data structure for a content-recording unit in the first embodiment of the present invention.
Fig. 2 (b) is a data table structure for a content-recording unit in the first embodiment of the present invention.
Fig. 3 is a data table structure for a memory unit in the first embodiment of the present invention.
Fig. 4 is a flowchart, illustrating how a content-recording apparatus in the first embodiment of the present invention behaves.
Fig. 5 is a flowchart, illustrating a content display processing of a content-recording apparatus in the first embodiment of the present invention.
Fig. 6 is a descriptive illustration, showing how a content-recording apparatus in the first embodiment of the present invention is used.
Fig. 7 is a data table structure for a memory unit in a second embodiment of the present invention.

Embodiments of the present invention. will now be described with reference to the drawings.

### (Embodiment 1)

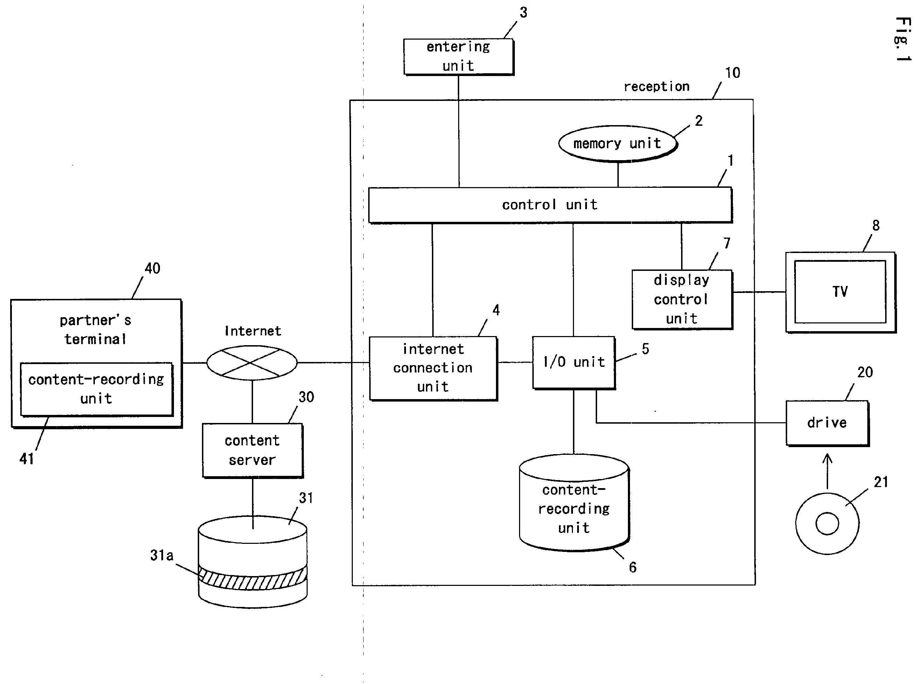

Fig. 1 is a block diagram for a content-reproducing apparatus, illustrating how a content-recording apparatus in a first embodiment of the present invention is used.

This content-reproducing apparatus comprises a television 8 as a display device, and a content-recording apparatus 10, which includes other elements 1 to 6.

First, a composition of a content-recording apparatus 10 of a receiving side is explained using Fig. 1.

A control unit 1 comprising CPU (Central Processing Unit), ROM (Read-Only Memory), etc. controls other elements shown in Fig. 1.

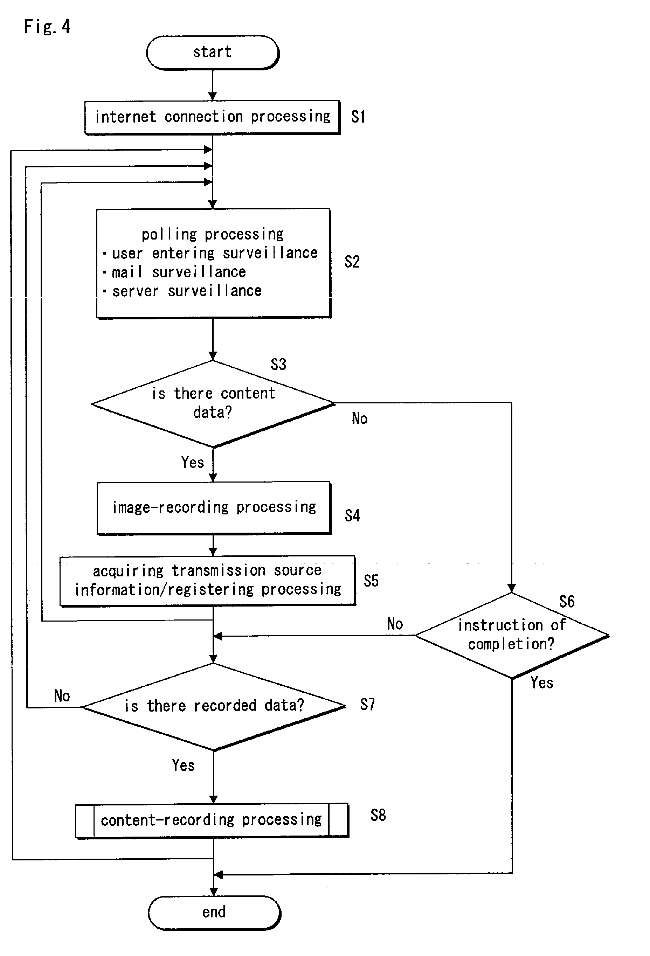

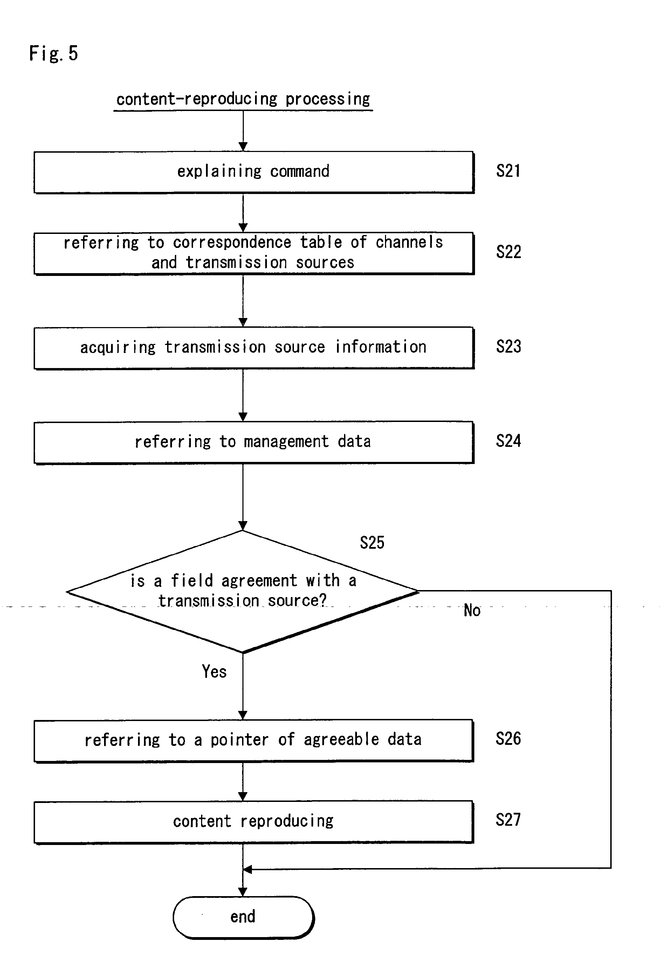

ROM stores program and others by which CPU performs operations in accordance with the flow charts shown in Fig. 4 and Fig. 5.

A memory unit 2 consisting of RAM (Random Access Memory) etc., secures memory domain in which the control unit 1 temporarily stores information necessary for processing.

The memory unit 2 stores a data describing relation between command information and channels.

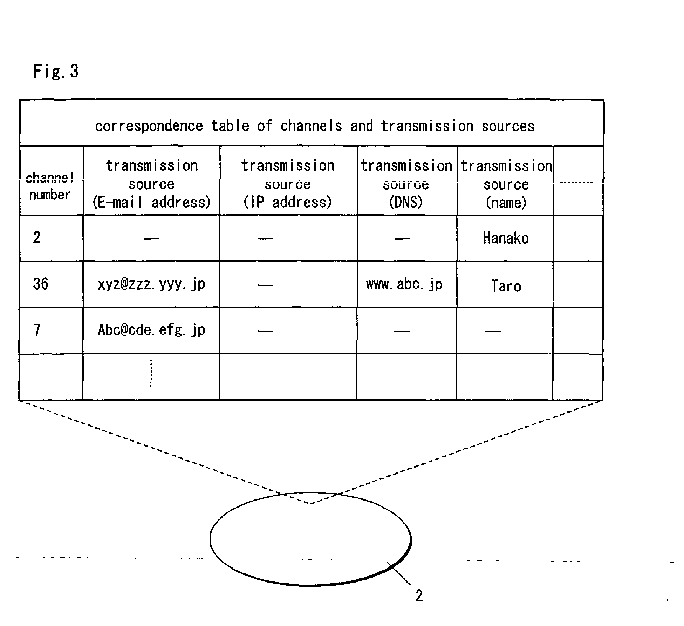

More specifically, a "correspondence table of channels and transmitting sources" as shown in Fig. 3 is stored in the memory unit 2.

A part of the memory unit 2 may be used as a cache for a content-recording unit 6.

An entering unit 3 comprises a keyboard, remote control, etc., and receives command information that a user inputs.

Operations inputted from the entering unit 3 include a channel changing operation by a user, a character inputting operation at the time of editing, and so on.

According to the present embodiment, a user can, via the entering unit 3, instruct changing specified channels, input and change a correspondent relation between channel information and transmission source information. The correspondent relation between channel information and transmission source information will be described later

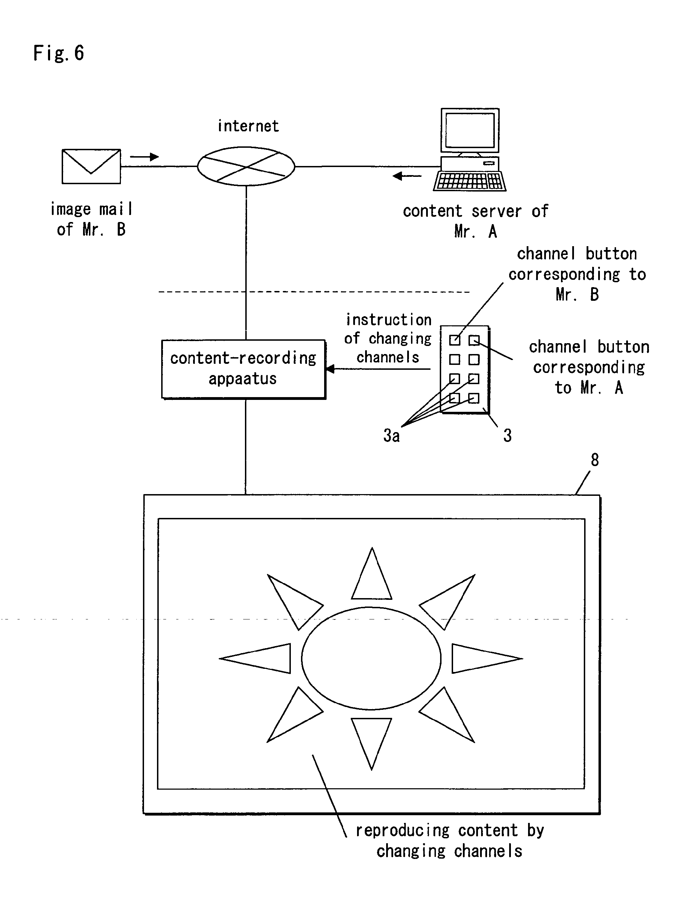

As shown in Fig. 6, special reproduction buttons 3a (for fast forward, stop, skip, slow forward, slow rewind, pause, etc.) are provided in the entering unit 3, and a user can perform a special reproduction by depressing the corresponding button.

Since a control of the monitor signals for the special reproductions can be realized with common knowledge technology, detailed explanation is omitted.

In Fig. 1, an Internet connection unit 4 is equivalent to a network connection unit, which acquires content data via a network.

Following the instruction of the control unit 1, the Internet connection unit 4 performs specification of a connection destination via the Internet, establishment of a communication session, and acquisition of content data.

The networks which transmit and receive content data may also include other networks than the Internet (for example, LAN at home, LAN in a company, etc.).

An I/O unit 5 follows the instruction of the control unit 1, and reads and writes the content data of the content-recording unit 6.

A drive 20 is connected to the I/O unit 5, and a recording medium 21 (for example, CD-ROM etc.) is set to the drive 20.

The content-recording program in accordance with the flowcharts of Fig. 4 and Fig. 5 is stored in the recording medium 21.

The control unit 1 loads this program into the memory unit 2, installs it in the content-recording unit 6, and executes this program.

The content-recording unit 6 is a nonvolatile medium, such as a hard disk, an optical disk, and a flash memory, and can read and write content data at random.

The content-recording unit 6 simply needs to be composed in such a manner that the control unit 1 can use the content-recording unit 6 just like a series of storage domains. A combination of a hard disk and an optical disk suffices for this application.

A display control unit 7 receives content data from the I/O unit 5, generates monitor signals that the television 8 can reproduce based on content data, and outputs the monitor signals to the television 8.

When the content data of the content-recording unit 6 is compressed by specification, such as MPEG, the display control unit 7 comprises a function that elongates the compressed content data.

The control unit 1 refers to the memory unit 2, and searches content data, in the content-recording unit 6, of a channel indicated by the command information that the entering unit 3 receives. When concerned content data exists, the control unit 1 makes the display control unit 7 generate monitor signals for the television 8 based on this content data.

The above is the content-recording apparatus of this embodiment.

The content-recording unit 6 may be built within this content-recording apparatus, or may be constituted as an independent body against the control unit 1, and suitably connected to the I/O unit 5 by a cable.

When transmission is via (path 2) that is described later, the content-recording unit 6 can be omitted.

The television 8, which is an example of a display device, may be or may not be constituted to one body with the content-recording apparatus.

As the television 8, a Braun tube, an LCD, or a plasma display can be used.

A content-recording apparatus 10 of a receiving side is composed of the above composition.

This content-recording apparatus 10 can acquire content data via the following two paths.

(Path 1) Content data is recorded in the content-recording unit 6 via the Internet from a content-recording unit 41 of a partner's terminal (a transmitting side) 40.

(Path 2) A fixed domain in a recording apparatus 31 of a content server 30 which exists on the Internet is set as a shared domain 31a, which a transmission source and a transmission destination can access.

In this case, it is sufficient for the partner's terminal 40 to upload content data into the shared domain 31 a, and the partner's terminal 40 does not have to directly transmit content data to the content-recording unit 6 of the receiving side.

The content-recording apparatus 10 downloads content data from the shared domain 31a, and reproduces it.

According to the (path 2), the shared domain 31a can substitute the content-recording unit 41 of the partner's terminal 40, and the content-recording unit 6 of the content-recording apparatus 10, and the burden of storage capacity can be reduced.

In the partner's terminal 40, since a path via which content data is transmitted becomes shorter than the (path 1), the transfer time can be saved.

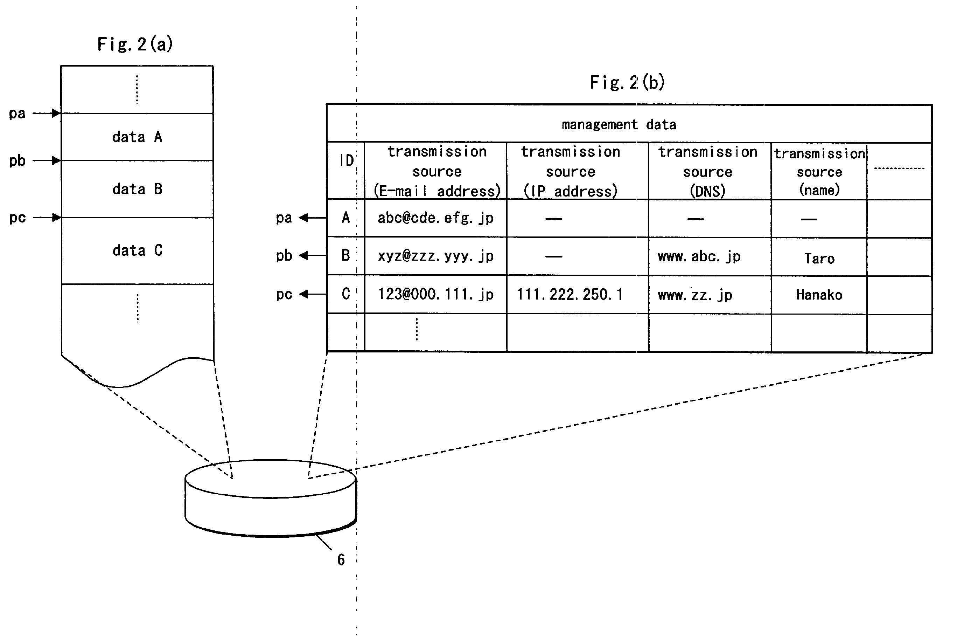

Next, an example of recording of the content-recording unit 6 according to the present embodiment is explained using Fig. 2.

According to the present embodiment, assume that content data is acquired from the partner's terminal 40 along the (path 1) via the Internet.

As mentioned above, the content-recording unit 6 is consisted in such a manner that the control unit 1 can use it as a series of storage domains. For example, as shown in Fig. 2 (a), the substance of content data is recorded as data A, data B, data C and so on. Here, pa, pb, and pc are pointers showing the start addresses of data A, data B, and data C, respectively.

Here, management information of content data is managed, for example, by the table shown in Fig. 2 (b).

As management items, ID of content data and fields of a transmission source of content data are defined for the example of Fig. 2 (b). The fields of the transmission source comprise such items as an E-mail address of a transmission source, an IP address, DNS, and a name and so on.

The field of "ID" is the identifier of content data, and consists of the names A, B, C, etc., and their pointers pa, pb, pc, etc.

Therefore, when this "ID" is obtained, the control unit 1 can freely access the corresponding content data of the content-recording unit 6 via the I/O unit 5.

Since "ID" just needs to distinguish various content data, the control unit 1 should determine "ID" so that it becomes a unique relation for each content data.

Each field of "E-mail", "IP address", "DNS", and "name" is a data field for specifying where content data comes from (that is, a transmission source showing who it is).

In the (path 1), the content data recorded on the content-recording unit 6 is acquired via the Internet.

In case the Internet connection unit 4 receives the packet, which constitutes content data, the control unit 1 acquires either one of or all of the values of "E-mail", "IP address", "DNS", and "name", based on header information of these packets, or a text part of an E-mail. After this, the control unit 1 sets a value into the corresponding field.

For example, when content data is sent as an attached file to E-mail etc., the mail address of a sender is included in the text part of the E-mail, and the value is set to the field of "E-mail".

The value of each above field may be omitted suitably and another field may be added.

Of course, the sequence of the field can be changed suitably without trouble.

All of each field does not need to be filled. It is enough, if at least one of the fields of a transmission source corresponding to each ID is filled, and a transmission source is specifically determined.

Next, the example of "correspondence table of channels and transmission sources" stored in the memory unit 2 is explained using Fig. 3.

In the example as shown in Fig. 3, the channel number and the fields of a transmission source are defined as items of the correspondence table of channels and transmission sources. The fields of a transmission source are composed of fields such as an E-mail, an IP address, DNS, and a name.

When a user specifies a channel number from the entering unit 3, the table shown in Fig. 3 is referred by the control unit 1 in order to determine which content data will be reproduced.

For example, when a channel number "36" is inputted from the entering unit 3, the control unit 1 searches an entry that has the channel number "36". When the search is successful, the fields of the transmission source of this entry are referred.

Next, the control unit 1 detects content data, which is in agreement with the value of the transmission source, from the management table (Fig. 2(a)) recorded on the content-recording unit 6, and will reproduce the content data.

In the example shown in Fig. 3, when the channel number "36" is inputted from the entering unit 3, Data B shown in Fig. 2(a) will be reproduced.

The value of each field shown in Fig. 3 may be omitted suitably, and another field may be added. Of course, the sequence of the field may be changed suitably without trouble. All of each field does not need to be filled. It is enough, if at least one of the fields of a transmission source corresponding to each ID is filled, and a transmission source is specifically determined.

A user can edit the value of each field using the entering unit 3. What is necessary as a user interface at that time is to display the data shown in Fig. 3 in a form of table. Since a display example of the user interface is almost the same as Fig. 3, an illustration is omitted.

Next, operations of the content-recording apparatus constructed as mentioned above is explained, referring to Fig. 4 and Fig. 5.

First, in step S1 of Fig. 3, when the Internet connection processing is started, the control unit 1 gives the Internet connection unit 4 an instruction of connection. Upon receiving the instruction, the Internet connection unit 4 starts connection with the Internet.

The connection with the Internet just needs to use the existing Internet connectivity technology, such as a dialup connection. Therefore, the detailed explanation is omitted.

When this connection is completed, the content-recording apparatus is able to communicate with the Internet (access to a Web server, acquisition of an E-mail, etc.).

Next, in step S2, the control unit 1 performs a polling processing.

In this polling processing, three processings, (1) surveillance of user entering, (2) surveillnace of content upload on the Web server, and (3) surveillance of an arrival for E-mail with content data, are performed every certain period of time.

When a certain event that hits to these three surveillances occurs, the processing progresses to step S3.

A sort of the event is judged in step S3.

If the event is an entering processing from a user, the processing progresses to step S6. If the event is upload of content, or an arrival of E-mail with content data, the event is judged as an event with content data, and the processing progresses to step S4.

A recording processing of content is performed in step S4.

When upload of content is discovered, via the Internet connection unit 4, the control unit 1 downloads the content on the Web server on the Internet via the Internet connection unit 4, and writes the content data in the content-recording unit 6 via the I/O unit 5.

When the arrival of E-mail with content data occurs, the control unit 1 takes the content data out of the E-mail, and writes the content data in the content-recording unit 6 via the I/O unit 15.

Next, in step S5, the control unit 1 acquires the information of a transmission source of the content data, and saves as content management data in the content-recording unit 6 via the I/O unit.

For the information of the transmission source of the content data, when contents on a Web server are downloaded, an IP address, DNS, etc. which were used as an access key during downloading are saved.

When an E-mail with content data is received, information of a transmission source is acquired and saved from the text part of the E-mail.

The content data and content management data saved in step S4 and step S5 are saved in the forms of Fig. 2 (a) and (b), respectively.

The processing of a recording processing of contents is now ended.

On the other hand, in step S3, when the event detected is a user entering, the processing moves to a completion judgment processing of step S6.

In the completion judgment processing of step S6, when a user entering is not completed, the processing moves to step S7.

In step S7, whether or not stored data exists is judged. When there is no stored date, the processing is returned to step S2.

Otherwise, a content display processing of step S8 is performed.

On the other hand, in the completion judgment processing of step S6, when the user entering is completed, all processing is ended.

Considering (path 2) described above, the content-recording processing of step 4 can be omitted.

What is necessary is acquiring and registering the owner information of contents (usually contained in a property of a file) as transmission source information of content data in step 5.

Next, details of a content display processing of step S8 are explained, referring to Fig. 5.

As shown in Fig. 5, in step S21, the control unit 1 analyzes the content of the command, which the user inputted.

According to the present embodiment, it is considered that a command equals an instruction of a channel number.

Therefore, the control unit 1 explains what number the specified channel number is.

Next, in step S22, the control unit 1 refers to the correspondence table of channel numbers and transmission sources stored in the memory unit 2.

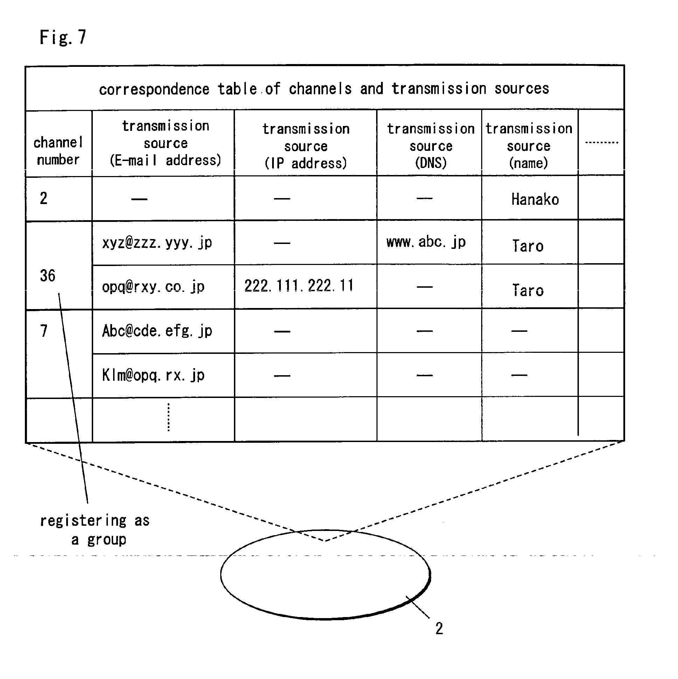

In step S23, the control unit 1 searches an entry whose channel number agrees within the table shown in Fig. 7. When the search is successful, the control unit 1 acquires the transmission source information of this entry.

In step S24, the control unit 1 refers to content management data stored in the content-recording unit 6 via the I/O unit 5.

In step S25, the control unit 1 searches an entry which is in agreement with the transmission source information acquired in step S23 within the content management data.

When the entry is found, the processing progresses to step S26.

In step S26, the control unit 1 refers to pointer information of a program within the entry found in step S25.

In step S27, the control unit 1 specifies content data based on the pointer information, passes the content data to the display control unit 7 via the I/O unit 5. The display control unit 7 reproduces the data (expanding will also be performed if necessary), and outputs the data to the television 8.

Thereby, the contents are displayed on the television 8.

On the other hand, in step S25, if an entry in agreement with the transmission source information is not found, a content display processing is not performed.

A descriptive illustration of the operations according to the present embodiment is now explained, referring to Fig. 6.

Fig. 6 shows how the content data uploaded on the contents server on the Internet and the content data attached to the E-mail are stored in the content-recording apparatus and then displayed on the television 8.

For example, when the channel (for example, NA) corresponding to the content server of Mr. A on the Internet is assigned, a user can view and listen to the content which Mr. A uploaded, just by pushing a channel button (for example, NA).

Since a channel corresponds to Mr. B is assigned on a different button NB, a user can view and listen to the content data attached to the E-mail from Mr. B, only by pushing the channel button NB.

### (Embodiment 2)

A second embodiment of the present invention is explained using Fig. 7.

Hereinafter, only different points from the first embodiment are described.

Fig. 7 corresponds to Fig. 3 in the first embodiment and indicates a recording example of "correspondence table of channels and transmission sources" of the memory unit 2, according to the second embodiment.

Unlike the first embodiment, on this table, a plurality of different transmission sources can be registered to one channel number. Some transmission sources are gathered as one group, and one channel is assigned to one group. Of course, one transmission source may belong to one group, and a plurality of transmission sources may belong to this group.

In this way, one transmission source with the E-mail address "xyz@zzz.yy.jp", and another transmission source with the E-mail address "opq@rxy.co.jp" can be grouped to the same one group, and they can be viewed and listened to by the same channel number 36.

Values of each field shown in Fig. 7 may be omitted suitably, and another field may be added. Of course, the sequence of the field can be changed suitably without trouble. All of each field does not need to be filled. It is enough, if at least one of the fields of a transmission source corresponding to each channel is filled, and a transmission source is specifically determined.

A user can edit the value of each field using the entering unit 3. What is necessary as a user interface at that time is to display the data shown in Fig. 3 in a form of table. Since a display example of this user interface is almost the same as Fig.7, an illustration is omitted.

Other points are same as those of the first embodiment.

According to the present invention, content data on a network and content data attached to an E-mail can be reproduced by a corresponding button operation by a user. Since procedures for opening E-mails and procedures for reproducing contents are not necessary, contents are easy to be viewed and be listened to. An easy-to-use audiovisual environment can be provided for users who are not used to operate computers.

Since a button can be assigned for every transmission source, a user can easily choose a transmission source just like changing channels of TV.

Since a button can be assigned to a certain group, a user can easily perform viewing-and-listening selection for every group.

A user can freely rewrite an assignment of a button for a transmission source, and an assignment of a button for a group; therefore, a channel assignment can be more flexible.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A content-recording apparatus comprising:
a content-recording unit (6) operable to record content data relating with a channel and the content data,
wherein the channel comprises a channel assigned to a transmitter and/or a transmitter's group having transmitted the content data.

2. The content-recording apparatus of claim 1, further comprising:
a network connection unit (4) operable to acquire content data via a network;
an entering unit (3) operable to receive command information entered by a user;
a memory unit (2) operable to memorize relation between the command information and the channel;
a display control unit (7) operable to generate a signal-for-display-device based on the content data recorded onto said content-recording unit (6); and
a control unit (1) operable to search, referring to said memory unit (2), at said content-recording unit (6), content data having a channel showed by command information entered by the user using said entering unit (3) to make, when the content data having the channel showed by the command information entered by the user using said entering unit (3) exits, said display control unit (7) generates a signal-for-display-device based on the content data having the channel showed by the command information entered by the user using said entering unit (3).

3. The content-recording apparatus of claim 2, wherein said content-recording unit (6) is connected to the network via said network connection unit (4).

4. The content-recording apparatus of claim 3, wherein said content-recording unit (6) exists in a shared area (31a) on the network.

5. The content-recording apparatus of claim 2, wherein said entering unit (3) comprises a channel button (3a), and
wherein command information generated by the depression of said channel button (3a) shows a channel number.

6. The content-recording apparatus of claim 5, wherein said entering unit (3) comprises a special reproduction button that acts on the signal-for-display-device.

7. The content-recording apparatus of claim 2, wherein said memory unit (2) memorizes, at least, a channel number and a transmitter's IP address relating with each other.

8. The content-recording apparatus of claim 2, wherein said memory unit (2) memorizes, at least, a channel number and a transmitter's E-mail address relating with each other.

9. The content-recording apparatus of claim 2, wherein the transmitter information memorized onto said memory unit (2) comprises DNS (domain name service).

10. The content-recording apparatus of claim 2, wherein the transmitter information memorized onto said memory unit (2) comprises a transmitter's name.

11. The content-recording apparatus of claim 2, wherein contents memorized onto said memory unit (2) are able to edit using said entering unit (3).

12. A content-reproducing apparatus comprising:
a content-recording unit (6) operable to record content data relating with a channel and
the content data;
a network connection unit (4) operable to acquire content data via a network;
an entering unit (3) operable to receive command information entered by a user;
a memory unit (2) operable to memorize relation between the command information and the channel;
a display control unit (7) operable to generate a signal-for-display-device based on the content data recorded onto said content-recording unit (6); and
a control unit (1) operable to search, referring to said memory unit (2), at said content-recording unit (6) content data having a channel showed by command information entered by the user using said entering unit (3) to make, when the content data having the channel showed by the command information entered by the user using said entering unit (3) exits, said display control unit (7) generate a signal-for-display-device based on the content data having the channel showed by the command information entered by the user using said entering unit (3),
wherein the channel comprises a channel assigned to a transmitter and/or a transmitter's group having transmitted the content data.

13. A content-recording method comprising:
recording content data relating with a channel and the content data,
wherein the channel comprises a channel assigned to a transmitter and/or a transmitter's group having transmitted the content data.

14. The content-recording method of claim 13, further comprising:
acquiring content data via a network;
receiving command information entered by a user;
memorizing relation between the command information and the channel;
generating a signal-for-display-device based on the content data recorded onto a content-recording unit (6);
searching, referring to the relation between the command information and the channel, at the content-recording unit content data having a channel showed by command information entered by the user;
generating, when the content data having the channel showed by the command information entered by the user exits, a signal-for-display-device based on the content data having the channel showed by the command information entered by the user.

15. The content-recording method of claim 14, wherein the content data is stored in a shared area (31a) on the network.

16. The content-recording method of claim 14, wherein the command information entered by the user shows a channel number.

17. The content-recording method of claim 16, wherein said generating, when the content data having the channel showed by the command information entered by the user exits, the signal-for-display-device based on the content data having the channel showed by the command information entered by the user is accordance with a special reproduction input by the user.

18. The content-recording method of claim 14, further comprising,
memorizing, at least, a channel number and a transmitter's IP address relating with each other.

19. The content-recording method of claim 14, further comprising,
memorizing, at least, a channel number and a transmitter's E-mail address relating with each other.

20. The content-recording method of claim 14, wherein the transmitter information comprises DNS (domain name service).

21. The content-recording method of claim 14, wherein the transmitter information comprises a transmitter's name.

22. The content-recording method of claim 14, wherein the relation between the command information and the channel is able to edit.

23. A recording medium having a content-recording program recorded therein, the content-recording program comprising:
recording content data relating with a channel and the content data,
wherein the channel comprises a channel assigned to a transmitter and/or a transmitter's group having transmitted the content data.
